# EUROPÄISCHE PATENTANMELDUNG

(11) **EP 1 329 280 A1**
(43) Veröffentlichungstag der Anmeldung: **23.07.2003**
(21) Anmeldenummer: 02028324.8
(22) Anmeldetag: 17.12.2002
(51) Int. Cl.: B23K 37/047, B23K 37/053, B23K 15/00, B23K 26/08

(54) **Verfahren und Vorrichtung zum Schweissen, Löten oder Schneiden**

(30) Priorität: 16.01.2002 AT 602002
(71) Anmelder: TMS Produktionssysteme GmbH, A-4031 Linz (AT)
(72) Erfinder: Kallabis, Matthias, Dr., 4020 Linz (AT)
(74) Vertreter: VA TECH Patente GmbH & Co

(57) **Zusammenfassung**

Die Erfindung betrifft ein Verfahren sowie eine entsprechende Vorrichtung zum Schweißen, Löten oder Schneiden unter Verwendung von zumindest einer Bearbeitungseinrichtung (2) zum Schweißen, Löten oder Schneiden, wobei ein zu bearbeitendes Werkstück (9) zum Erzeugen einer Verbindung bzw. zum Schneiden relativ zur Bearbeitungseinrichtung (2) bewegt wird, und ist dadurch gekennzeichnet, dass das Werkstück (9) während der Bearbeitung in Abhängigkeit von der während der Bearbeitung gemessenen räumlichen Lage der zu bearbeitenden Stellen relativ zur ortsfesten Bearbeitungseinrichtung (2) bewegt wird. Dadurch kann eine optimale Stellung der Bearbeitungseinrichtung, etwa einer Schweißeinrichtung, zum Werkstück auch für Schweißnähte, Lötstellen bzw. Schnittlinien mit komplexem Verlauf gewährleistet werden.

## Beschreibung

Die gegenständliche Erfindung betrifft ein Verfahren zum Schweißen, Löten oder Schneiden unter Verwendung von zumindest einer Bearbeitungseinrichtung zum Schweißen, Löten oder Schneiden, wobei ein zu bearbeitendes Werkstück zum Erzeugen einer Verbindung bzw. zum Schneiden relativ zur Bearbeitungseinrichtung bewegt wird, sowie einer entsprechenden Vorrichtung.

Bisher war es vor allem im Karosseriebau üblich, Werkstücke ortsfest zu positionieren und etwa eine Schweißnaht mit Hilfe einer an einem Schweißroboter beweglich angebrachten Schweißeinrichtung herzustellen. Allerdings ist dadurch nicht immer eine günstige Schweißposition erreichbar, d. h. die Stellung der Schweißeinrichtung zum Werkstück ist oft nicht optimal. Beim Bahnschweißen bedeutet dies etwa, dass der Brenner nicht immer in Wannenposition ist.

Eine Abänderung des gängigen Verfahrens zeigt die US 5 624 588, welche ein Schweißverfahren für zylindrische Werkstücke offenbart, bei dem das Werkstück zum Erzeugen einer kreisförmigen Schweißnaht relativ zu einer an einem Roboter befestigten Schweißeinrichtung in einer getrennten Vorrichtung um seine Längsachse gedreht wird. Allerdings ist dieses Verfahren nur für den angeführten Fall der vorprogrammierten Kreisform anwendbar.

Das Verfahren der US 5 624 588 ist daher nicht geeignet für jene Fälle, wo die Schweißnaht einen komplexen Verlauf zeigt, der Änderungen der Position des Werkstückes bzw. der Schweißeinrichtung in drei Raumrichtungen erfordert.

Eine Aufgabe der vorliegenden Erfindung besteht nun darin, ein Verfahren bzw. eine Vorrichtung zur Verfügung zu stellen, mit welchen eine optimale Stellung der Bearbeitungseinrichtung, etwa einer Schweißeinrichtung, zum Werkstück auch für Schweißnähte, Lötstellen bzw. Schnittlinien mit komplexem Verlauf gewährleistet werden kann.

Die Aufgabe wird durch ein Verfahren gemäß Anspruch 1 bzw. durch eine Vorrichtung gemäß Anspruch 4 gelöst.

Neu ist, dass das Werkstück nicht einem programmierten Verlauf folgend, sondern dem tatsächlichen, mit einem Sensor gemessenen Verlauf folgend bewegt und mittels der ortsfesten Bearbeitungseinrichtung bearbeitet wird. Die Bearbeitungseinrichtung ist nicht beweglich, die gewünschte Bearbeitungsposition oder etwaige Korrekturen derselben werden durch Änderung der Lage des Werkstückes eingestellt, z.B. durch Veränderung der Position des Roboterarms, an dem das Werkstück befestigt ist. Der Sensor führt seine Arbeit im Wesentlichen zeitgleich mit der Bearbeitung durch. Es wird insbesondere nicht zuerst der gesamte zu bearbeitende Verlauf mit dem Sensor erfasst und gespeichert, um anschließend anhand der gespeicherten Daten ohne Betrieb des Sensors die Bearbeitung durchzuführen.

Bei der vorliegenden Erfindung können durch die on-line-Erfassung der Koordinaten des Werkstückes nicht nur rotationsymmetrische, sondern beliebig geformte Werkstücke bearbeitet werden.

Folgende Bearbeitungseinrichtungen können erfindungsgemäß eingesetzt werden: Einrichtungen zum Plasmaschweißen, -löten und -schneiden, zum MIG/MAG-Schweißen und Löten, zum WIG- Schweißen und Löten, alle genannten Brenner bzw. Schweiß- und Lötköpfe mit und ohne Zusatzdraht; Laserstrahlwerkzeuge zum Laserschweißen, -löten und -schneiden. Insbesondere sind Bearbeitungseinrichtungen zum Bahnschweißen oder -löten zur Anwendung geeignet.

Die Erfindung lässt sich vorteilhaft auf jene Werkstücke anwenden, wo die Naht- bzw. Schnittlinie keine Gerade oder Kurve in einer Ebene ist. Grundsätzlich können dies metallische Werkstücke oder Werkstücke aus Kunststoff sein, wie etwa Stahlbleche oder Gussteile.

Der Sensor erfasst entsprechend der Art der Bearbeitung die Nahtlinie bzw. die Schnittlinie: bei Schweißnähten beispielsweise den Höhensprung bei zwei aufeinander liegenden Blechen, also die Kanten, oder den Spaltverlauf.

Als Sensoren kommen übliche Nahtverfolgungssensoren in Frage. Es können etwa Lasersensoren verwendet werden, die quer zur Bearbeitungsrichtung gerichtete Lichtbänder aussenden, die den zu bearbeitenden Bereich (etwa die Nahtstelle) überdecken. Aus der vom Werkstück reflektierten Strahlung kann mittels Triangulation die Position des zu bearbeitenden Bereichs im Raum ermittelt werden. Neben den berührungslosen Lasersensoren können auch das Werkstück berührende mechanische Tastsensoren eingesetzt werden.

Für jede Nahtform bzw. Schnittart ist im Sensor bzw. in der dem Sensor zugeordneten Auswerteeinheit ein spezielles Erkennungsprogramm hinterlegt. Dieses wertet die vom Sensor gemessenen Daten entsprechend der vorliegenden Art der Naht aus, indem etwa bei übereinander liegenden Blechen die Kante des oberen Bleches detektiert wird oder bei nebeneinander angeordneten Blechen der Spalt zwischen den beiden Blechen.

Die Bewegungseinrichtung besteht aus einer steuerbaren bewegbaren Einrichtung, etwa einem Roboter, und einer Spanneinrichtung für das Werkstück. Die Spanneinrichtung richtet sich nach der Geometrie, den Abmessungen und dem Gewicht des Werkstücks sowie dem Verlauf der Naht bzw. der Schnittlinie. Sie besteht beispielsweise aus einer Zentriereinrichtung und einer Spanneinheit. Die Spanneinheit, z.B. ein Spannrahmen, hält das Werkstück in einer definierten Lage, während der Roboter die Spanneinrichtung so bewegt, dass am Werkstück die gewünschte Verbindung oder der gewünschte Schnitt entsteht. Das Werkstück wird durch die Spanneinrichtung so gespannt, dass es kollisionsfrei am Sensor und der Bearbeitungseinrichtung vorbeibewegt werden kann und zudem die gesamte Naht bzw. Schnittlinie von der Bearbeitungseinrichtung erreicht werden kann.

Zusätzlich zum sogenannten Nahtverfolgungssensor kann ein weiterer Sensor angeordnet werden, der die Beschaffenheit der erzeugten Verbindung oder des erzeugten Schnittes erfasst. Dieser wird bezogen auf die Bearbeitungsrichtung nach der Bearbeitungseinrichtung angeordnet und ermöglicht, dass die Qualität der erzeugten Verbindung bzw. des erzeugten Schnittes sofort nach Bearbeitung beurteilt werden kann und ein eigener Arbeitsgang zur Qualitätskontrolle, z.B. der Naht- oder Schnittoberfläche, nicht notwendig ist. Dies kann ebenfalls mit einem Lasersensor erfolgen, welcher z.B. Abweichungen in Höhe und Breite der Schweißnaht detektiert oder Poren und Vertiefungen auf der Schweißnaht erkennt.

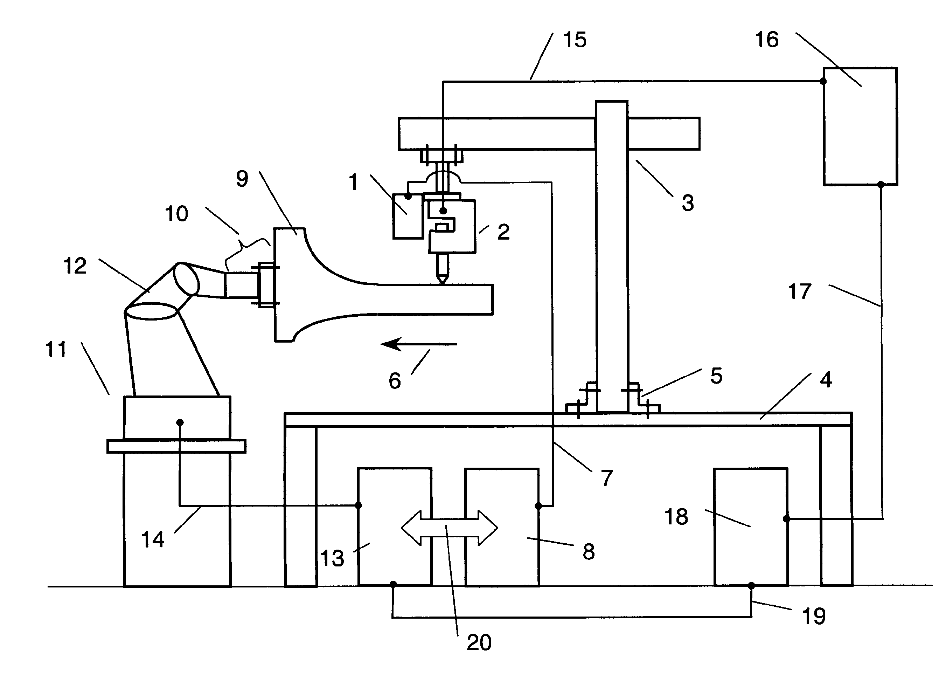

Eine bevorzugte Ausführung der Erfindung ist in der Figur schematisch dargestellt, welche die Anordnung von Bearbeitungs- und Bewegungseinrichtung zeigt.

In dieser Ausführung ist sowohl der Sensor 1 als auch die Bearbeitungseinrichtung 2 ortsfest angeordnet, nämlich an einem Ständer 3, welcher an einem Schweißtisch 4 durch eine geschraubte Verbindung 5 befestigt ist. Der Sensor 1 ist dabei so angeordnet, dass er bezogen auf die Bearbeitungsrichtung 6 (welche der Bewegungsrichtung des Werkstücks entgegengesetzt ist) vor der Bearbeitungseinrichtung 2 angeordnet ist. Dadurch ist es möglich, dass aus den Daten des Sensors 1, welche über eine Leitung 7 an die Auswerteeinrichtung 8 weitergeleitet werden, laufend die einzunehmende Position des Werkstücks 9 vorausbestimmt und die Spanneinrichtung 10 mit dem Werkstück vom Roboter 11 entsprechend nachgeführt wird, sodass eine Naht mit dreidimensionalem Verlauf entsteht. Die Spanneinrichtung 10 des Werkstücks 9 ist am beweglichen Arm 12 des Roboters befestigt, z.B. durch eine Verschraubung oder durch eine automatische Verriegelung.

Durch den Sensor 1 kann die räumliche Lage der zu bearbeitenden Stelle relativ zum feststehenden Sensor 1 und damit relativ zur feststehenden Bearbeitungseinrichtung 2 gemessen werden. Die Daten des Sensors 1 werden entweder durch eine eigene Auswerteeinrichtung 8 oder durch ein in der Robotersteuerung 13 integriertes Auswerteprogramm ausgewertet und die resultierenden Steuerdaten über eine Leitung 14 dem Roboter 11 zugeführt. Im gezeigten Beispiel ist eine eigene Auswerteeinrichtung 8 vorgesehen, die über eine Schnittstelle 20 Daten mit der Steuerung 13 des Roboters austauscht.

Die Bearbeitungseinrichtung 2 ist im vorliegenden Fall eine Schweißeinrichtung, welche als Schweißbrenner oder als Laserstrahlwerkzeug ausgeführt sein kann. Die Schweißeinrichtung 2 wird über Leitung 15 mit einer Energiequelle 16, einer Plasmastrom- bzw. einer Laserquelle, verbunden. Die Energiequelle 16 ist über eine Steuerleitung 17 mit einer Schweißsteuerung 18 verbunden. Diese ist über eine Datenleitung 19 mit der Robotersteuerung 13 verbunden, um den Beginn des Schweißvorgangs mit dem Beginn der Roboterbewegung koordinieren zu können.

Vor dem Schweißvorgang ist ein Kalibriervorgang als vorbereitender Arbeitsschritt erforderlich. Dabei wird die Nahtsuchrichtung für den Sensor festgelegt. Der Sensor wird auf die gegebene Konfiguration - nämlich Sensor auf fixem Ständer montiert, Roboter über Sensor gesteuert - kalibriert.

Es wird vor dem Schweißvorgang mit der Sensor-Software ein Bahnprogramm für die Nahtgeometrie erstellt. Im Bahnprogramm ist festgelegt, wann der Schweißbrenner zündet.

Es wird weiters mit der Sensor-Software ein Nahtprogramm erstellt mit Auswahl der Nahtform (Kehlnaht, Stumpfnaht, etc.) und der zugehörigen Parametrierung (Spaltmaße, Blechüberstände,etc...). Damit ist sichergestellt, dass der Sensor die Lage der Naht richtig erkennt.

Der Startpunkt (Roboterposition) wird so festgelegt, dass die Lichtbalken des Sensors vor dem Anfang der Schweißnaht liegen.

Zu Beginn des Schweißvorgangs fährt der Roboter mit dem Werkstück von der Home-Position auf den programmierten Startpunkt. Sodann übernimmt die Sensorsoftware die Steuerung des Roboters. Zuerst beginnt die Nahtsuche in der im Kalibriervorgang festgelegten Richtung. Dabei überstreichen im Fall des Scout-Lasersensors die Lichtbalken den Beginn des Werkstücks/der Schweißnaht. Im Bahnprogramm ist festgelegt, nach wieviel mm nach Beginn der Schweißnaht der Schweißbrenner zündet (Beginn der Schweißnaht wird vom Sensor erkannt).

Dann wird über das Bahnprogramm, welches der Sensor-Software zugeordnet ist, die Nahtgeometrie/Bahn der Naht abgefahren und geschweißt bzw. gelötet. Die entsprechenden Schweiß- bzw. Lötparameter werden an die Schweißsteuerung geliefert. Meist ist das Bahnprogramm in verschiedene Phasen mit unterschiedlichen Schweißparametern, wie Stromstärke, Drahtvorschubgeschwindigkeit, etc. aufgeteilt. So wird etwa an einer festgelegten Stelle kurz vor Nahtende der Strom langsam abgesenkt, um ein Brennloch am Ende zu verhindern.

Das Ende der Naht wird vom Sensor, der dem Brenner voreilt, erfasst, wobei im Bahnprogramm festgelegt ist, wieviel mm vor Ende der Naht der Brenner ausgeschaltet wird.

Diese Abstände am Beginn und Ende der Naht lassen sich genau festlegen, weil der Sensor einen genau definierten Abstand zum Brenner hat.

Das oben Gesagte gilt in analoger Weise auch für das Löten oder Schneiden.

## Patentansprüche

1. Verfahren zum Schweißen, Löten oder Schneiden unter Verwendung von zumindest einer Bearbeitungseinrichtung (2) zum Schweißen, Löten oder Schneiden, wobei ein zu bearbeitendes Werkstück (9) zum Erzeugen einer Verbindung bzw. zum Schneiden relativ zur Bearbeitungseinrichtung (2) bewegt wird, **dadurch gekennzeichnet, dass** das Werkstück (9) während der Bearbeitung in Abhängigkeit von der während der Bearbeitung gemessenen räumlichen Lage der zu bearbeitenden Stellen relativ zur ortsfesten Bearbeitungseinrichtung (2) bewegt wird.

2. Verfahren nach Anspruch 1, **dadurch gekennzeichnet, dass** die Beschaffenheit der erzeugten Verbindung oder des erzeugten Schnittes während der Bearbeitung erfasst wird.

3. Anwendung des Verfahrens nach einem der Ansprüche 1 oder 2 beim Bahnschweißen oder -löten.

4. Vorrichtung zum Schweißen, Löten oder Schneiden, bestehend aus zumindest einer Bearbeitungseinrichtung (2) zum Schweißen, Löten oder Schneiden, und einer Bewegungseinrichtung (11), mittels welcher ein zu bearbeitendes Werkstück (9) zum Erzeugen einer Verbindung bzw. zum Schneiden relativ zur Bearbeitungseinrichtung (2) bewegt werden kann, **dadurch gekennzeichnet, dass** die Bearbeitungseinrichtung (2) ortsfest angeordnet ist, dass mindestens ein Sensor (1) vorgesehen ist, welcher die räumliche Lage der zu bearbeitenden Stellen erfasst, und dass der Sensor (1) mit der steuerbaren Bewegungseinrichtung (11) so verbunden ist, dass das Werkstück (9) während der Bearbeitung in Abhängigkeit von Messwerten des Sensors (1) bewegt werden kann.

5. Vorrichtung nach Anspruch 4, **dadurch gekennzeichnet, dass** der Sensor (1) ortsfest und bezogen auf die Bearbeitungsrichtung vor der Bearbeitungseinrichtung (2) angeordnet ist.

6. Vorrichtung nach Anspruch 4 oder 5, **dadurch gekennzeichnet, dass** der Sensor (1) als Lasersensor ausgebildet ist, welcher Laserstrahlung aussendet und die vom Werkstück (9) reflektierte Strahlung erfasst.

7. Vorrichtung nach einem der Ansprüche 4 bis 6, **dadurch gekennzeichnet, dass** die steuerbare Bewegungseinrichtung (11) ein Roboter mit einem beweglichen Arm (12) ist, an welchem eine Spannvorrichtung (10) für Werkstücke (9) befestigt werden kann.

8. Vorrichtung nach einem der Ansprüche 4 bis 7, **dadurch gekennzeichnet, dass** ein Sensor vorgesehen ist, mit welchem die Beschaffenheit der erzeugten Verbindung oder des erzeugten Schnittes erfasst werden kann.

9. Verwendung der Vorrichtung nach einem der Ansprüche 4 bis 8 zum Bahnschweißen oder -löten.
